Europäisches Patentamt

European Patent Office

Office européen des brevets

(19)

(11) Numéro de publication : **0 375 054 B1**

(12) **FASCICULE DE BREVET EUROPEEN**

(45) Date de publication du fascicule du brevet :
05.07.95 Bulletin 95/27

(51) Int. Cl.⁶ : **G06F 15/80**

(21) Numéro de dépôt : **89203224.4**

(22) Date de dépôt : **18.12.89**

(54) **Circuit intégré neuromimétique avec des moyens d'apprentissage.**

(30) Priorité : **23.12.88 FR 8817109**

(43) Date de publication de la demande :
**27.06.90 Bulletin 90/26**

(45) Mention de la délivrance du brevet :
**05.07.95 Bulletin 95/27**

(84) Etats contractants désignés :
**CH DE FR GB IT LI SE**

(56) Documents cités :
**NEURAL NETWORKS, no. 1, supplément 1, 1988; J.J. PAULOS et al.: "A VLSI architecture for feedforward networks with integral back-propagation"**
**IEEE FIRST INTERNATIONAL CONFERENCE ON NEURAL NETWORKS, San Diego, CA, 21-24 juin 1987, pages III-403-III-409, IEEE, New York, US; A. AGRANAT et al.: "A new architecture for a microelectronic implementation of neural network models"**

(73) Titulaire : **LABORATOIRES D'ELECTRONIQUE PHILIPS**
**3, Avenue Descartes**
**F-94450 Limeil-Brévannes (FR)**
(84) **FR**
Titulaire : **Philips Electronics N.V.**
**Groenewoudseweg 1**
**NL-5621 BA Eindhoven (NL)**
(84) **CH DE GB IT LI SE**

(72) Inventeur : **Duranton, Marc**
**Societe Civile S.P.I.D**
**209, rue de l'Université**
**F-75007 Paris (FR)**
Inventeur : **Sirat, Jacques-Ariel**
**Societe Civile S.P.I.D**
**209, rue de l'Université**
**F-75007 Paris (FR)**

(74) Mandataire : **Landousy, Christian et al**
**Société Civile S.P.I.D.**
**156, Boulevard Haussmann**
**F-75008 Paris (FR)**

EP 0 375 054 B1

## Description

L'invention concerne un circuit intégré neuromimétique comprenant :
- une mémoire M de coefficients synaptiques Cij,
- une mémoire d'états de neurones,
- des moyens de résolution pour déterminer des états de neurones de sortie i à partir des états de neurones d'entrée j,
- des moyens d'apprentissage pour déterminer des nouveaux coefficients synaptiques Cij en effectuant des phases d'apprentissage de type local.

Elle concerne également une structure de réseau de neurones munie d'un automate de traitement opérant avec un tel circuit neuromimétique.

Une invention de ce genre est connue du document "A fully digital CMOS integrated feedback network including the learning process" M. WEINFELD, G. DREYFUS, A. JOHANNET, L.PERSONNAZ, Neural Networks for computing. SNOWBIRD. UTAH 6-9 Avril 1988.

Il s'agit d'un circuit intégré qui met en oeuvre des phases de résolution et des phases d'apprentissage exploitant la règle d'apprentissage de Widrow-Hoff. Ce circuit est conçu avec un parallélisme sur les états de neurones de sortie i avec un mécanisme de circulation des informations qui est effectué sur l'indice j relatif aux états des neurones d'entrée j. Il découle de ceci que l'on ne peut pas isoler un traitement particulier sur un neurone donné. Ce circuit ne peut donc opérer qu'avec un nombre restreint de règles d'apprentissage.

Bien que le circuit décrit par Neural Networks, no. 1, supplément 1, 1988, page 399 permette en principe d'isoler un traitement particulier sur un neurone de sortie donné, la modification des coefficients synaptiques des neurones de sortie est néanmoins effectuée d'une manière séquentielle dans une ALU centrale.

Le problème posé par l'invention est de réaliser un circuit intégré neuromimétique, destiné à être utilisé dans une structure de réseau de neurones munie d'un automate de traitement, qui puisse opérer à grande vitesse en opérant simultanément la remise à jour de tous les coefficients synaptiques d'un neurone de sortie i donné et qui puisse également mettre en oeuvre la plupart des règles d'apprentissage afin que le circuit puisse être exploité pour résoudre de nombreux problèmes qu'ont à traiter les structures de réseaux de neurones.

La solution à ce problème posé consiste en ce que, pour un neurone de sortie i donné, les moyens d'apprentissage opèrent simultanément en parallèle sur chacun des coefficients synaptiques, lus en mémoire, qui caractérisent les synapses qui relient les neurones d'entrée j convergeant vers un neurone de sortie i et pour cela les moyens d'apprentissage comprennent :
- des moyens pour faire agir une fonction d'apprentissage sur des paramètres formés par les états de neurones d'entrée Vj et par un élément de correction Si, propre à chaque neurone de sortie i afin de déterminer si une modification est à apporter à chaque coefficient synaptique et le signe de cette modification,
- et des incrémenteurs-décrémenteurs qui déterminent en parallèle les nouveaux coefficients synaptiques Cij à partir du signe respectif des modifications et d'une valeur de correction $\Delta i$ qui est relative à ce neurone de sortie i et qui est commune à tous les neurones d'entrée j qui y convergent,

où $\Delta i$ est une valeur de correction liée soit à l'état des neurones d'entrée j, soit à l'état du neurone de sortie i, soit à une fonction combinant ces deux types d'états qui est déterminée soit par le circuit lui-même, soit transmise par un automate de traitement,
et où Si est soit l'état d'un neurone d'entrée j, soit l'état du neurone de sortie i donné, soit des états qui sont des fonctions de ces deux types d'états et qui sont transmises par l'automate de traitement.

En phase dite "de résolution", le circuit neuromimétique va sélectionner dans la mémoire M tous les coefficients synaptiques Cij d'un neurone de sortie i donné et les multiplier par les états Vj des neurones d'entrée j et effectuer la somme de tous ces produits tel que :

$$\sum_{j=1}^{N} Cij.Vj.$$

N étant le nombre total de neurones d'entrée qui influencent le neurone de sortie i.

Les coefficients synaptiques Cij sortent en parallèle de la mémoire M, entrent chacun dans un incrémenteur/décrémenteur, dont la sortie entre dans un organe de calcul formé par exemple de multiplieurs et d'un arbre d'additionneurs. Le résultat est extrait du circuit et transmis à l'automate de traitement qui fait agir sur ce résultat une fonction non-linéaire. Cette fonction non-linéaire peut également être appliquée au résultat par l'organe de calcul lui-même, avant d'être transmis à l'automate de traitement. Les états des neurones d'entrée j à traiter peuvent être fournis soit par l'automate de traitement soit par le monde extérieur. En phase dite "d'apprentissage", les incrémenteurs/décrémenteurs reçoivent des signaux de commande afin d'opérer, soit une incrémentation soit une décrémentation, soit aucune modification du coefficient synaptique concerné. Ces signaux de commande proviennent des moyens faisant agir la fonction d'apprentissage qui délivrent à chaque incrémenteur/décrémenteur un signal sur deux bits pour coder les commandes précédentes.

Les fonctions d'apprentissage vont tenir compte des états Vj des neurones d'entrée et d'un élément de correction Si, propre à chaque neurone de sortie i. Les moyens faisant agir la fonction d'apprentissage sont formés d'éléments d'apprentissage en nombre égal au nombre d'incrémenteurs/décrémenteurs et donc de coefficients synaptiques Cij à traiter simultanément. Chacun de ces éléments d'apprentissage reçoit un état Vj et l'élément de correction Si qui l'un et l'autre peuvent être codés sur un ou plusieurs bits. Ces éléments d'apprentissage peuvent être formés soit de portes logique ET soit des portes logiques OU-exclusif soit une combinaison de portes opérant une fonction complexe. Ils peuvent également être formés de multiplexeurs qui sélectionnent soit la valeur logique 1, soit la valeur logique 0 soit au moins un bit d'état de neurone Vj ou de l'élément de correction Si, soit leur complément.

Les incrémenteurs/décrémenteurs reçoivent ces signaux de commande ainsi qu'une valeur de correction $\Delta i$ commune à tous et qui est spécifique du neurone de sortie i traité à un instant donné. Ainsi chaque incrémenteur va indépendamment de l'autre soit incrémenter d'une valeur $\Delta i$ le coefficient synaptique, soit le décrémenter d'une valeur $\Delta i$, soit ne rien modifier. Cette valeur de correction $\Delta i$ est transmise au circuit par l'automate de traitement. Mais elle peut également être déterminée par le circuit lui-même dans un circuit de correction. Cette valeur de correction $\Delta i$ est préférentiellement un entier pour donner au coefficient synaptique la précision requise.

Les opérations d'incrémentation/décrémentation peuvent être effectuées sur plusieurs cycles consécutifs pour opérer avec des états de neurones codés sur plusieurs bits. En effet chaque élément d'apprentissage peut recevoir des états Vj et un élément de correction Si codés sur plusieurs bits. Il est aussi possible en effectuant plusieurs cycles consécutifs d'effectuer des opérations de multiplication Vj.Si avec un choix adéquat des $\Delta i$ fournis à chaque cycle. Un organe de sélection peut permettre de donner à l'élément de correction Si soit l'état d'un neurone d'entrée j, soit l'état du neurone de sortie i donné, soit des états qui sont une fonction de ces deux types d'états et qui sont transmis par l'automate de traitement.

Les incrémenteurs/décrémenteurs peuvent en outre présenter chacun une fonction de mémorisation afin de libérer la mémoire de coefficients synaptiques pour qu'elle effectue d'autres tâches.

L'invention sera mieux comprise à l'aide des figures suivantes données à titre d'exemple non limitatif qui représentent :

figure 1 : un schéma du circuit neuromimétique selon l'invention.

figure 2 : un schéma d'un autre mode de réalisation des fonctions d'apprentissage.

Le circuit neuromimétique 10 est réuni à un automate de traitement 50 afin de constituer une structure de réseau de neurones. La mémoire 11 de coefficients synaptiques Cij délivre en parallèle sur j les coefficients synaptiques Cij (bus $19_1$ à $19_N$) relatifs à un même neurone de sortie i donné. Les coefficients synaptiques arrivent sur des incrémenteurs/décrémenteurs 12 qui délivrent leurs coefficients à un organe de calcul 13. Celui-ci comprend par exemple des multiplieurs pour effectuer les multiplications Cij.Vj et un arbre d'additionneurs pour effectuer la somme de toutes ces multiplications. Le résultat apparait sur la connexion 14 pour être délivré à l'automate de traitement 50 qui fait agir sur ce résultat une fonction non-linéaire. Cette fonction peut être effectuée dans l'organe de calcul 13 lui-même.

Les états Vj de neurones d'entrée j sont stockés dans une mémoire d'état de neurones 15 qui les reçoit de l'automate de traitement 50 ou de l'extérieur (connexion 25) et les délivre à l'organe de calcul 13. La mémoire d'états de neurones 15 peut recevoir, de l'automate de traitement, des états de correction au cours de phase d'apprentissage. Les moyens 16 pour faire agir des fonctions d'apprentissage sont formées des éléments d'apprentissage $16_1$, $16_2$, ..., $16_N$ lorsqu' il y a N neurones d'entrée j à traiter. Chaque élément d'apprentissage reçoit un état Vj et l'élément de correction Si issu d'un registre de correction 17. Chaque élément d'apprentissage délivre une donnée numérique codée sur deux bits à chaque incrémenteur/décrémenteur pour qu'il effectue soit une incrémentation, soit une décrémentation soit aucune opération. Le registre de correction 17 est chargé par l'élément de correction Si qui peut avoir plusieurs origines. Il peut être chargé soit par un des états Vj des neurones d'entrée 3, soit par un état Vi des neurones de sortie i, soit par une fonction de ces deux types d'états et qui lui arrive par l'automate de de traitement 50.

Les incrémenteurs/décrémenteurs 12 reçoivent également tous une même valeur de correction $\Delta i$ qui est utilisée pour modifier ou non les anciennes valeurs Cij pour déterminer des nouvelles valeurs Cij selon l'expression :

Cij(nouveau) = Cij(ancien) + $\Delta i \cdot f(V_j, S_i)$.

Cette valeur de correction $\Delta i$ peut provenir soit de l'automate de traitement 50 soit d'un circuit de correction 18 qui fait agir une fonction de correction F sur l'élément de correction Si.

Par exemple, pour calculer Vj.Si avec des états de neurones codés sur plusieurs bits, le registre de correction 17 délivre ses données aux moyens 16 pour déterminer le type d'opération à effectuer et le circuit de correction 18 délivre à chaque cycle la valeur $\Delta i$ correspondant aux valeurs de Si décalées successivement d'un pas binaire c'est-à-dire les valeurs $2^n.Si$ où n est le nombre de pas binaires. Les incrémenteurs/décrémenteurs sont ainsi utilisés pour opérer des multiplications décomposées en une suite d'opérations élémentaires.

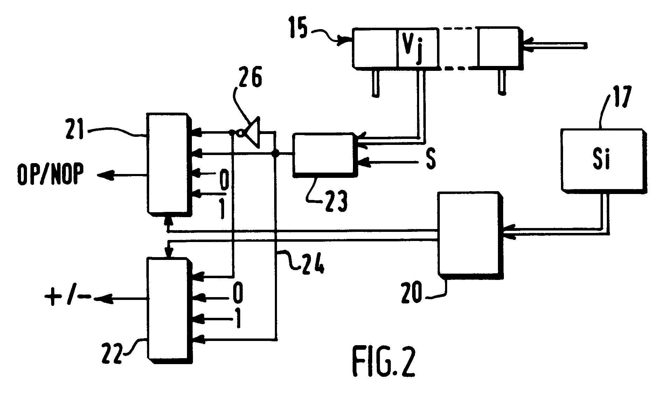

Les éléments d'apprentissage $16_1$ ... $16_N$ sont par exemple soit des portes logiques ET soit de portes logiques OU-exclusif soit une combinaison de portes opérant une fonction complexe. Il est également possible selon la figure 2 de faire effectuer la fonction d'apprentissage elle-même par un circuit commun qui délivre des commandes communes à des multiplexeurs qui traitent chacun des états de neurones d'entrée Vj. Dans ce cas les différents éléments d'apprentissage $16_1$ ... $16_N$ se partagent un circuit 20.

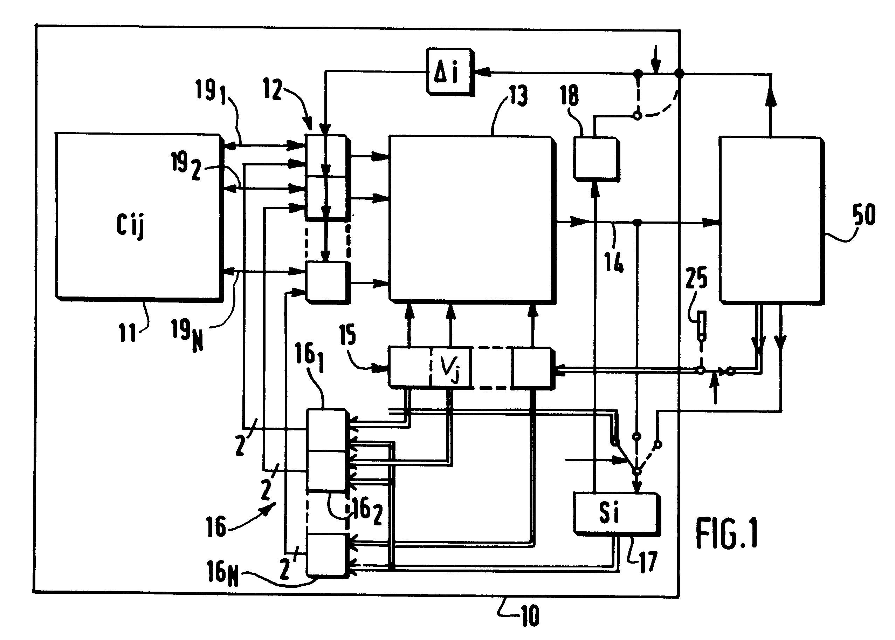

Par exemple, l'élément d'apprentissage $16_1$ de la figure 1 est alors formé sur la figure 2 des multiplexeurs 21, 22 et 23. Le multiplexeur 23 lit un bit de l'état $V_1$ dans la mémoire 15. Il délivre successivement tous les bits de $V_1$ contrôlé par la commande S. Si $V_1$ est codé sur un bit le multiplexeur 23 n'existe pas. Les multiplexeurs 21 et 22 reçoivent bit après bit l'état $V_1$ (connexion 24). Ils peuvent sélectionner soit l'état logique 1, soit l'état logique zéro, soit l'état $V_1$, soit l'état complémentaire de $V_1$ (inverseur 26). Les multiplexeurs 21 et 22 sont commandés par le circuit 20 qui met en oeuvre la fonction d'apprentissage choisie, par exemple des fonctions ET, OU-exclusif ou des fonctions complexes. Le circuit 20 est par exemple un réseau à logique programmée (PLA) ou une RAM. Les multiplexeurs 22 et 21 ont des commandes distinctes et délivrent en sortie respectivement les signaux +/- pour l'incrémentation/décrémentation et les signaux OP/NOP pour déterminer si l'opération est à effectuer ou non.

Les incrémenteurs-décrémenteurs peuvent comprendre des moyens pour éviter le dépassement au cours des opérations. Par exemple un coefficient synaptique peut prendre en cas de dépassement soit la valeur maximale soit la valeur minimale permise par le circuit.

Les incrémenteurs/décrémenteurs peuvent être cascadables d'un circuit à l'autre afin d'utiliser des coefficients synaptiques codés sur un nombre de bits accru. Pour cela chaque incrémenteur/décrémenteur possède une entrée pour une retenue d'entrée et une sortie pour une retenue de sortie permettant soit de reconfigurer le circuit soit de cascader plusieurs circuits pour étendre les possibilités de traitement à un nombre accru de neurones.

A titre d'exemple un algorithme d'apprentissage que peut mettre en oeuvre le circuit selon l'invention est celui dit du recouvrement minimal de prototypes (voir à ce sujet W. KRAUTH et M. MEZARD J. Phys A 20 (1987) L745-L752). Le but est alors de réaliser une mémoire associative pour laquelle le réseau associe en sortie le prototype présenté à l'entrée. Ceci peut être appliqué à la correction d'erreurs. L'apprentissage est itératif et procède indépendamment sur les neurones i de sortie.

Pour un neurone de sortie i donné, on présente un prototype $\xi_j^\mu$ (où $\mu$ est l'indice du prototype et j celui du neurone) à l'entrée du circuit qui opère alors en phase de résolution.

Le circuit calcule :

$$h_i^\mu = \Sigma_j Cij.\xi_j^\mu$$

Lorsque tous les prototypes ont été présentés, on choisit le prototype d'indice $\nu$ tel que $h_i^\nu$ est inférieur à $h_i^\mu$ pour tout $\mu$.

Le circuit fonctionne alors en phase d'apprentissage en modifiant les coefficients synaptiques relatifs au neurone de sortie i selon l'expression :

$$Cij \text{ (nouveau)} = Cij \text{ (ancien)} + \xi_i^\nu.\xi_j^\nu$$

L'élément de correction est donc donné par :

$$S_i = \xi_j^\nu$$

et l'incrément par :

$$\Delta i = \xi_i^\nu$$

Cette procédure est itérée jusqu'à ce que les sommes $h_i^\mu$ soient toutes supérieures à un critère Z, pour tous les prototypes $\mu$ et tous les neurones de sortie i.

Il est à noter que cet algorithme a des performances optimales pour ce type de réseaux.

## Revendications

1. Circuit intégré neuromimétique (10) comprenant:
   - une mémoire (11) de coefficients synaptiques Cij,
   - une mémoire (15) d'états de neurones,
   - des moyens (13) de résolution pour déterminer des états de neurones de sortie i à partir des états de neurones d'entrée j,
   - des moyens (12,16,20-26) d'apprentissage pour déterminer des nouveaux coefficients synaptiques Cij en effectuant des phases d'apprentissage de type local,

   caractérisé en ce que, pour un neurone de sortie i donné, les moyens d'apprentissage opèrent simultanément en parallèle sur chacun des coefficients synaptiques, lus en mémoire, qui caractérisent les synapses qui relient les neurones d'entrée j convergeant vers un neurone de sortie i et pour cela les moyens d'apprentissage comprennent :
   - des moyens (16,20-26) pour faire agir une fonction d'apprentissage sur des paramètres formés par les états de neurones d'entrée Vj et par un élément de correction Si, propre à chaque neurone de sortie i, afin de déterminer si une modification est à apporter à chaque coefficient synaptique et le signe de cette modification,
   - et des incrémenteurs-décrémenteurs (12) qui déterminent en parallèle les nouveaux coefficients synaptiques Cij à partir du signe respectif des modifications et d'une valeur de correction Δi qui est relative à ce neurone de sortie i et qui est commune à tous les neurones d'entrée j qui y convergent,

où Δi est une valeur de correction liée soit à l'état des neurones d'entrée j, soit à l'état du neurone de sortie i, soit à une fonction combinant ces deux types d'états qui est déterminée soit par le circuit lui-même, soit transmise par un automate de traitement (50), et où Si est soit l'état d'un neurone d'entrée j, soit l'état du neurone de sortie i donné, soit des états qui sont des fonctions de ces deux types d'états et qui sont transmises par l'automate de traitement (50).

2. Circuit selon la revendication 1, caractérisé en ce que les moyens pour appliquer les fonctions d'apprentissage sont soit des portes logiques ET soit des portes logiques OU-exclusif soit une combinaison de portes opérant une fonction complexe.

3. Circuit selon la revendication 1, caractérisé en ce que les moyens pour appliquer les fonctions d'apprentissage comprennent des multiplexeurs (21,22,23) qui sélectionnent soit la valeur logique 1, soit la valeur logique 0 soit au moins un bit d'état de neurone d'entrée Vj ou de l'élément de correction Si, soit leur complément.

4. Circuit selon une des revendications 1 à 3, caractérisé en ce que les opérations d'incrémentation/décrémentation s'effectuent sur plusieurs cycles consécutifs pour opérer avec des états de neurones codés sur plusieurs bits.

5. Circuit selon la revendication 4, caractérisé en ce que lesdites opérations effectuent des opérations de multiplications.

6. Circuit selon une des revendications 1 à 5 caractérisé en ce que les incrémenteurs/décrémenteurs possèdent chacun une fonction de mémorisation.

7. Circuit selon une des revendications 1 à 6 caractérisé en ce qu'il comprend un registre de correction (17) qui reçoit l'élément de correction Si.

8. Circuit selon une des revendications 1 à 7 caractérisé en ce qu'il comprend un circuit de correction (18) qui fait agir une fonction de correction F sur l'élément de correction Si pour générer la valeur de correction Δi.

9. Circuit selon une des revendications 1 à 8 caractérisé en ce que chaque incrémenteur/décrémenteur possède une entrée pour une retenue d'entrée et une sortie pour une retenue de sortie permettant soit de reconfigurer le circuit soit de cascader plusieurs circuits pour étendre les possibilités de traitement à un nombre accru de neurones.

10. Structure de réseau de neurones caractérisée en ce qu'elle comprend un circuit neuromimétique (10) selon une des revendications 1 à 9 et un automate de traitement (50).

**Patentansprüche**

1. Neuromimetische integrierte Schaltung (10) mit:
   - einem Speicher (11) für synaptische Koeffizienten Cij,
   - einem Speicher (15) für Neuronenzustände,
   - Lösungsmitteln (13) zur Bestimmung von Zuständen von Ausgangsneuronen i auf Basis von Zuständen von Eingangsneuronen j,
   - Lernmittel (12, 16, 20-26) zur Bestimmung neuer synaptischer Koeffizienten Cij durch Ausführen lokaler Lernphasen,

   dadurch gekennzeichnet, daß für ein gegebenes Ausgangsneuron i die Lernmittel gleichzeitig und parallel auf jeden der im Speicher gelesenen synaptischen Koeffizienten wirken, die die Synapsen kennzeichnen, die die zu einem Ausgangsneuron i konvergierenden Eingangsneuronen j verbinden, und daher die Lernmittel folgendes umfassen:
   - Mittel (16, 20-26), um eine Lernfunktion auf die von den Eingangsneuronenzuständen Vj und von einem zu jedem Ausgangsneuron i gehörenden Korrekturelement Si gebildeten Parameter wirken zu lassen, um festzustellen, ob eine Modifikation bei jedem synaptischen Koeffizient anzubringen ist und das Vorzeichen dieser Modifikation zu bestimmen,
   - und Inkrementierer-Dekrementierer (12), die die neuen synaptischen Koeffizienten Cij auf Basis des jeweiligen Vorzeichens der Modifikationen und eines mit diesem Ausgangsneuron i verbundenen Korrekturwertes Δi, der allen dorthin konvergierenden Eingangsneuronen j gemeinsam ist, parallel bestimmen,

   wobei Δi ein entweder mit dem Zustand des Eingangsneurons j, mit dem Zustand des Ausgangsneurons i oder mit einer diese beiden Zustandsarten kombinierenden Funktion zusammenhängender Korrekturwert ist, der entweder von der Schaltung selbst bestimmt oder von einem Verarbeitungsautomaten (50) übertragen wird, und wobei Si entweder einen Zustand des Eingangsneurons j, den Zustand des gegebenen Ausgangsneurons i oder Zustände darstellt, die Funktionen dieser beiden Zustandsarten sind und von dem Verarbeitungsautomaten (50) übertragen werden.

2. Schaltung nach Anspruch 1, dadurch gekennzeichnet, daß die Mittel zum Anwenden der Lernfunktionen entweder UND-Logikgatter oder XOR-Logikgatter oder eine eine komplexe Funktion ausführende Gatterkombination sind.

3. Schaltung nach Anspruch 1, dadurch gekennzeichnet, daß die Mittel zum Anwenden der Lernfunktionen Multiplexer (21, 22, 23) umfassen, die entweder den Logikwert 1 oder den Logikwert 0 oder mindestens ein Bit des Eingangsneuronenzustands Vj oder des Korrekturelements Si oder deren Komplement selektieren.

4. Schaltung nach einem der Ansprüche 1 bis 3, dadurch gekennzeichnet, daß die Inkrementier-Dekrementier-Operationen in mehreren aufeinanderfolgenden Zyklen erfolgen, um mit in mehreren Bits codierten Neuronenzuständen zu arbeiten.

5. Schaltung nach Anspruch 4, dadurch gekennzeichnet, daß die genannten Operationen Multiplikationsoperationen darstellen.

6. Schaltung nach einem der Ansprüche 1 bis 5, dadurch gekennzeichnet, daß die Inkrementierer-Dekrementierer jeweils eine Speicherfunktion umfassen.

7. Schaltung nach einem der Ansprüche 1 bis 6, dadurch gekennzeichnet, daß sie ein Korrekturregister (17) umfaßt, das das Korrekturelement Si aufnimmt.

8. Schaltung nach einem der Ansprüche 1 bis 7, dadurch gekennzeichnet, daß sie eine Korrekturschaltung (18) umfaßt, die auf das Korrekturelement Si eine Korrekturfunktion wirken läßt, um den Korrekturwert $\Delta i$ zu erzeugen.

9. Schaltung nach einem der Ansprüche 1 bis 8, dadurch gekennzeichnet, daß jeder Inkrementierer-Dekrementierer einen Eingang für einen Eingangsübertrag und einen Ausgang für einen Ausgangsübertrag hat, was entweder ein Neukonfigurieren der Schaltung oder ein Kaskadieren mehrerer Schaltungen erlaubt, um die Verarbeitungsmöglichkeiten auf eine größere Zahl Neuronen zu erweitern.

10. Neuronale Netzstruktur, dadurch gekennzeichnet, daß sie eine neuromimetische Schaltung (10) nach einem der Ansprüche 1 bis 9 umfaßt sowie einen Verarbeitungsautomaten (50).

## Claims

1. A neural integrated circuit (10) comprising:
   - a memory (11) for synaptic coefficients Cij,
   - a memory (15) for neuron states,
   - resolving means (13) for determining states of output neurons i on the basis of states of input neurons j,
   - learning means (12, 16, 20-26) for determining new synaptic coefficients Cij by performing local learning steps,

   characterized in that for a given output neuron i the learning means simultaneously operate in parallel on each of the synaptic coefficients, read in the memory, which characterize the synapses which link the input neurons j converging towards an output neuron i, for which purpose the learning means comprise:
   - means (16, 20-26) for imposing a learning function on parameters which are formed by the states Vj of input neurons and by a correction element Si which is associated with each output neuron i in order to determine whether a modification is to be applied to each synaptic coefficient and to determine the sign of this modification,
   - and incrementation/decrementation elements (12) which determine in parallel the new synaptic coefficients Cij on the basis of the respective sign of the modifications and of a correction value $\Delta i$ which is associated with the relevant output neuron i and which is common to all input neurons j which converge towards the relevant output neuron,

   where $\Delta i$ is a correction value which relates either to the state of the input neurons j or to the state of the output neuron i or to a function which combines these two types of state and which is determined either by the circuit itself or is supplied by a processing device (50), and where Si represents either the state of an input neuron j or the state of the given output neuron i, or states which are functions of these two types of state and which are supplied by the processing device (50).

2. A circuit as claimed in Claim 1, characterized in that the means for applying the learning functions are either logic AND-gates or logic exclusive-OR gates or a combination of gates performing a complex function.

3. A circuit as claimed in Claim 1, characterized in that the means for applying the learning functions comprise multiplexers (21, 22, 23) which select either the logic value 1 or the logic value 0 or at least one bit of the input neuron state Vj or of the correction element Si, or their complement.

4. A circuit as claimed in any one of the Claims 1 to 3, characterized in that the incrementation/decrementation operations are performed in several consecutive cycles for operation with neuron states encoded on several bits.

5. A circuit as claimed in Claim 4, characterized in that said operations are multiplication operations.

6. A circuit as claimed in any one of the Claims 1 to 5, characterized in that each of the incrementation/decrementation elements has a storage function.

7. A circuit as claimed in any one of the Claims 1 to 6, characterized in that it comprises a correction register (17) which receives the correction element Si.

8. A circuit as claimed in any one of the Claims 1 to 7, characterized in that it comprises a correction circuit (18) which performs a correction function F on the correction element Si in order to generate the correction value $\Delta i$.

9. A circuit as claimed in any one of the Claims 1 to 8, characterized in that each incrementation/decrementation element comprises an input for an input carry and an output for an output carry, enabling either a reconfiguration of the circuit or the cascading of several circuits in order extend the processing possibilities to an accrued number of neurons.

10. A neural network system, characterized in that it comprises a neural circuit (10) as claimed in any one of the Claims 1 to 9 and a processing device (50).

FIG.1

FIG.2